# EUROPEAN PATENT SPECIFICATION

(11) **EP 1 423 821 B1**
(45) Date of publication and mention of the grant of the patent: **16.08.2006**
(21) Application number: 02780930.0
(22) Date of filing: 07.05.2002
(51) Int. Cl.: G06K 9/32, G06K 9/46, A61B 5/117

(54) **METHOD AND APPARATUS FOR CHECKING A PERSON'S IDENTITY, WHERE A SYSTEM OF COORDINATES, CONSTANT TO THE FINGERPRINT, IS THE REFERENCE**
VERFAHREN UND VORRICHTUNG ZUR PRÜFUNG DER IDENTITÄT EINER PERSON, WOBEI EIN FÜR DEN FINGERABDRUCK KONSTANTES KOORDINATENSYSTEM DER BEZUG IST
PROCEDE ET DISPOSITIF DE VERIFICATION D'IDENTITE D'INDIVIDUS A BASE DE CONSTANTES D'EMPREINTES DIGITALES FONCTIONNANT EN SYSTEME DE COORDONNEES

(30) Priority: 29.06.2001 SE 0102376; 05.07.2001 US 302664 P
(43) Date of publication of application: 02.06.2004
(73) Proprietor: Precise Biometrics AB, 224 64 Lund (SE)
(72) Inventor: SVEDIN, Ola, SE-211 49 Malmö (SE); KRISTEN, Helmuth, SE-223 54 Lund (SE)
(74) Representative: Andersson, Björn E.
(86) International application number: PCT/SE2002/000871
(87) International publication number: WO 2003/003286

(56) References cited:
- EP-A2- 0 862 131
- EP-A2- 0 994 439
- EP-B1- 0 343 580
- US-A- 4 135 147
- DATABASE WPI Derwent Publications Ltd., London, GB; Class P31, AN 2001-312071, XP002957479 & JP 2001 076142 A (NIPPON TELEGRAPH & TELEPHONE CORP) 23 March 2001
- JAIN A. ET AL: 'An identity-Authentication Sytem Using Fingerprints' PROCEEDINGS OF THE IEEE vol. 85, no. 9, 1997, pages 1365 - 1388, XP000738563

## Description

### Field of the Invention

The present invention relates to methods and apparatuses for use in checking a person's identity. In particular the invention relates to such methods and apparatuses where the check is based on comparison of specific features, referred to as minutiae points, in fingerprints. The invention also relates to a method and an apparatus for recording reference fingerprint data.

### Background Art

It is known to use fingerprints for use in checking a person's identity. In such a check, a current fingerprint from the person whose identity is to be checked is compared with previously recorded reference fingerprint data for one or more persons.

If the check concerns a verification of the person's identity, the current fingerprint is compared only with reference data for the person who the person whose identity is to be checked pretends to be.

If the check concerns an identification of the person's identity, the current fingerprint is compared with reference data for at least two, but usually several, different persons to determine whether the current fingerprint originates from any of these persons.

It is previously known to store reference data for a person in a personal portable unit, for instance on a personal smart card which the person uses when he or she wants to authenticate himself/herself, i.e. prove his/her identity by either verification or identification.

In personal portable units there is usually a limited storage capacity. In such cases it is desirable to have a small amount of reference data.

It is also known to carry out the final part of the identity check in the personal portable unit. This part includes a comparison between the current data and the reference data. An advantage is here increased security since the reference data need not leave the personal unit. A problem in the context is, however, that some personal units such as standard type smart cards may have a limited processor capacity in many applications the user also wants to authenticate himself without delay. It is then desirable that the current data and the reference data can be compared in a quick and easy manner.

The reference data can correspond to a complete fingerprint as recorded. Usually, however, only part of the information in the fingerprint is saved as reference data. For instance it is known to save partial areas of an image of the fingerprint as reference data. A method in which partial areas are used as reference data on a smart card is described in applicant's WO 01/11577.

It is also known to save as reference data information about specific features, also referred to as minutiae points, in the fingerprint. These specific features are usually of two predetermined types, viz. fingerprint ridge ending and fingerprint ridge bifurcation.

In an identity check, the relative location of the features in a reference fingerprint and a current fingerprint is compared. This can be compared to comparing two maps to check whether they have the cities in corresponding locations. This comparison requires a fairly large amount of calculations and therefore cannot be carried out in a reasonable time, for example, on a standard type smart card.

DE 19811332 suggests a solution to how features can be used on a smart card. According to this solution, coordinates for reference features which are stored on the card are transmitted to a processing unit. These coordinates are used to compare the relative location of reference features and current features in a current image of a fingerprint from the person whose identity is to be checked. When it has been identified which current features correspond to which reference features, the type of each of these current features is determined. With each of the reference features that have been transmitted to the processing unit, the type of the corresponding current feature is associated, and sent back to the smart card, on which the type of the current feature is compared with the type of corresponding reference features to determine whether the current feature and the reference fingerprint originate from one and the same person and one and the same finger.

A drawback of this solution is security. Since there are only a small number of features of which in most cases only two types are used, viz. ridge ending and ridge bifurcation, there is a relatively great risk that an unauthorised person, i.e. a person other than the one whose reference data is stored on the smart card, is accepted as the authorised person. There is also a risk that the types will be incorrectly determined if the fingerprint image is noisy.

EP 0 343 580 B1 discloses the exchange of information between an IC card and an image processing unit. A subset of reference information (minutiae) is determined based on a random number generator. This subset is sent to the processing unit together with alignment information. Verification is carried out on the processing unit and on the card based on this subset only.

WO 01/06445 suggests a different solution which means that in addition to the coordinates of each reference feature there is also stored information about its direction in the form of an angle and information about its closest neighbouring feature. Thus the feature map is divided into smaller overlapping parts, where each part contains a central feature and neighbouring features. When the identity check is to be carried out, the map of the current features is divided in a corresponding manner in a processing unit. Subsequently one part at a time is sent to the smart card where it is compared with one reference part at a time.

A drawback of this method is that the reference data requires about 1-3 Kbyte storage space depending on how many features the current person's fingerprint contains.

### Summary of the Invention

An object of the present invention thus is to provide methods and apparatuses for use in checking a person's identity by means of features, which methods and apparatuses allow the final identity check to be carried out on a standard type smart card or some other corresponding unit with limited processor capacity; make it possible to use reference data requiring a small storage capacity; and yet enable security which is acceptable for many applications.

This object is achieved wholly or partly by methods? apparatuses and a system, according to the appended independant claims.

By expressing the locations of the current features By expressing the locations of the current features and the locations of the reference features by means of absolute coordinates in a fingerprint-constant coordinate system, the locations of the features can be compared directly with each other without the relations with neighbouring features needing to be taken into consideration. As a result, the comparison can be carried out involving only a small number of very simple operations. Furthermore the reference data requires little storage space. Security will be considerably higher than in the case of comparing types of feature.

It should be emphasised that the steps defined in claim 1 can be carried out in an order other than the stated. The step of determining how the current image is oriented can, for example, be carried out before the current features are found in the image.

By the reference coordinate system being fingerprint constant is meant that it accompanies the fingerprint and is fixed thereto. If first an image of a reference fingerprint is made, a coordinate system is used to indicate the location of the features therein. The coordinate system can be defined by the image and, for example, have its origin in the lower left corner or the centre of the image and the coordinate axes parallel with the horizontal and vertical edges of the image. Then, when a current image of the fingerprint is made, the actual fingerprint can be differently located in the image. It can be rotated and/or translated relative to the fingerprint in the current image. The coordinate system used to determine the location of the features in the current image is, however, fixed in relation to the fingerprint in the same way as in the reference image, so that the locations of the features will be directly comparable with each other. It should be pointed out however, that this is applicable with certain tolerances since the fingerprint will often not have exactly the same extent and appearance in two successively recorded images because the person in question presses his finger with different pressures against the surface of the sensor which records the images and thus deforms the fingerprint to different extents.

By features is meant so-called minutiae points, which consist of, for instance, ridge endings and ridge bifurcations, but which may also comprise other characteristic points, for example pores and islets.

The method described above is well suited for use in a processing unit communicating with a verifying unit in which reference features-are stored and in which the final identity check is to be carried out. The orientation of the current image in the reference coordinate system can then be determined by means of alignment information received from the verifying unit.

The alignment information may consist of one or more of the following: alignment features which are fetched from a reference fingerprint image from which also the reference features are fetched, one or more partial areas from the reference fingerprint image, a directional map which is based on the reference fingerprint image, a finger code which is based on the reference fingerprint image, frequency information from the reference fingerprint image or some other suitable information from the reference fingerprint image.

The alignment features may be a plurality of selected features among those found in a reference fingerprint image in connection with the storing of reference data. The number should be so large that the translation and/or rotation of the current image in relation to the reference coordinate system can be determined.

A partial area can be part of a binarised reference fingerprint image, for instance a part in the centre thereof. This partial area can then be aligned with the current image so that the orientation thereof in the reference coordinate system can be determined. The alignment can be made by the partial area being compared with the binarised current image in different relative locations and a score is calculated for overlapping pixels with the same bit values.

A directional map can be a stylised representation of the directions of the fingerprint ridges in a part of the reference fingerprint. This directional map is then compared with a directional map for the current image to determine the orientation of the current image in the reference coordinate system.

A finger code is a code generated by finding a reference point in the fingerprint and gabor filtering.

It should be pointed out that the orientation of the current image in the reference coordinate system can also be determined without alignment information. In that case, a predetermined reference point is found in the current fingerprint by studying the ridges thereof. How this is done is well known to a person skilled in the art, see for instance US 6,241,288. If a corresponding reference point has been identified in the reference fingerprint image, the translation of the current image in relation to the reference fingerprint image can thus be determined. Moreover, the rotation of the current image in relation to the reference fingerprint image can be determined by the main direction of the current fingerprint and the reference fingerprint being determined by means of symmetry considerations.

In addition to the absolute coordinates for the current features, also the angle of the current features can be determined in the fingerprint-constant reference coordinate system. Use of the angles in addition to the absolute coordinates yields increased security.

The current image is usually recorded by means of a sensor on which the person's finger can be placed in different positions. This is the normal design of today's fingerprint sensors, which design causes the problem that it has previously not been possible to directly compare absolute coordinates for current features and reference features.

The method of claim 7 makes it possible to carry out a quick comparison of features in the verifying unit by means of only a small number of simple operations.

The method of claim 18 makes possible reference data which requires little storage space and which can quickly and easily be compared with current data.

It should be emphasised that the steps of this method can be carried out in an order other than the one mentioned. For example, the alignment information can be determined before the features are found and the public reference fingerprint data can be stored before the private reference fingerprint data.

What has been mentioned above in the first aspect of the invention is in applicable parts also relevant for the method according to the second and third aspects.

The methods discussed above can be realised by means of a computer program which is executed by a processor. The computer program can be distributed stored on a storage medium, for instance a memory of electronic, optical, magnetic or some other known type. The storage medium may also be a propagating signal.

The methods discussed above can also be realised by means of a processing unit and a verifying unit which is adapted to carry out the respective methods. The units may comprise a general or specific processor and appropriate software. The units can also be realised with special-purpose hardware, such as an ASIC (Application Specific Integrated Circuit), or with an FPGA (Field Programmable Gate Array) or with analog or digital circuits, or with some suitable combination thereof.

The verifying unit may be, for example, a SIM card in a mobile telephone, a PC card, a flash memory, a verifying unit with an integrated fingerprint sensor or a similar portable unit.

### Brief Description of the Drawings

The present invention will now be described in more detail by way of example and with reference to the accompanying drawings, in which
Figs 1a and 1b schematically show a current fingerprint image and a reference fingerprint image in a sensor-constant coordinate system;
Figs 2a and 2b schematically show a current fingerprint image and a reference fingerprint image in a fingerprint-constant coordinate system;
Fig. 3 schematically shows a system in which the present invention can be realised;
Fig. 4 is a flow chart and shows an example of a method for recording reference features;
Fig. 5 is a flow chart and shows an example of a method which is carried out in a processing unit when verifying a person's identity, and
Fig. 6 is a flow chart and shows an example of a method which is carried on a smart card when verifying a person's identity.

### Detailed Description of Embodiments

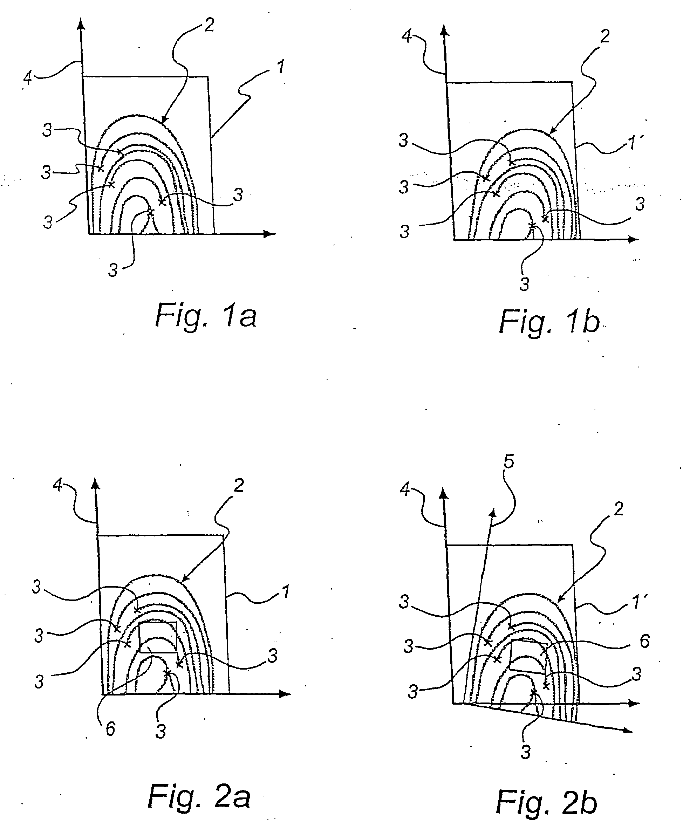

Figs 1a and 1b illustrate first the basic problem which is solved by the invention. Figs 2a and 2b illustrate the principle of the solution.

Fig. la shows schematically a reference image 1 of a fingerprint 2 from a person for whom reference fingerprint data in the form of features is to be stored. In the image a number of features are designated 3. The size of the image corresponds to the size of the sensor surface of a sensor by means of which the image is recorded. A coordinate system 4 is marked in the Figure. This coordinate system can be said to be associated with or related to the sensor or the image. The coordinates for the features are determined in the coordinate system 4. The features 3 will thus have coordinates depending on where they are located on the sensor surface or in the image. These coordinates are stored as reference fingerprint data for the fingerprint 2 in the image. It should be pointed out that the fingerprint and the features are shown most schematically. A real fingerprint has a plurality of ridges and a plurality of features.

Fig. 1b shows a current image 1' of the same fingerprint 2 as in Fig. 1. The image 1' is recorded when the person in question wants to authenticate himself. The authentication is to be made by means of a comparison of the current features 3 in the current image 1' with the previously stored reference features. In this case, the person in question has placed his finger with a small slant on the sensor. The features 3 will therefore have quite different coordinates in the coordinate system 4 related to the sensor. In the case of Fig. 1a and the case of Fig. 1b one and the same coordinate system related to the sensor is used. This can thus be referred to as a sensor-constant coordinate system.

In order to determine whether the fingerprints in Figs 1a and 1b originate from one and the same finger and thus from one and the same person, different techniques have so far been used to find out whether the features are relatively positioned in the same way in the two images. This comparison requires that both "maps" with features be translated and rotated relative to each other.

According to the invention, the coordinate system 4 is translated and/or rotated instead, so that it will be a fingerprint-constant reference coordinate system 5, which in turn means that the coordinates for the features will be directly comparable with each other. This is illustrated in Figs 2a and 2b.

Fig. 2a is the same as Fig. 1a. The locations of the reference features 3 are thus determined in the coordinate system 4 which is related to the reference image 1. Fig. 2b corresponds to Fig. 1b. In Fig. 2b, however, a fingerprint-constant reference coordinate system 5 is introduced in the image. This reference coordinate system 5 is translated and rotated in relation to the sensor surface and the image so that the origin will be in the same position in the fingerprint, thus not in the image, as in Figs 1a and 2a. The coordinate system used in Figs 2a and 2b thus accompanies the fingerprint instead of the sensor surface or the image and is therefore referred to as a fingerprint-constant coordinate system. The current features and the reference features will thus have essentially the same absolute coordinates if the current fingerprint and the reference fingerprint originate from the same finger and the same person. That the coordinates are not always exactly the same is due to the fact that the fingerprint can be differently distorted if the person presses his finger with different pressures against the sensor.

In order to make it possible to determine how the current fingerprint is translated and/or rotated in relation to the reference fingerprint, a subset of the fingerprint information in the reference fingerprint can be compared with the current fingerprint. This subset is an example of alignment information which thus is used to align the current image with the reference features. When the rotational and translational positions of this subset in relation to the current fingerprint have been determined, also the common reference coordinate system has been established. The subset is shown schematically in Figs 2a and 2b with a box 6. The alignment will be described below in more detail.

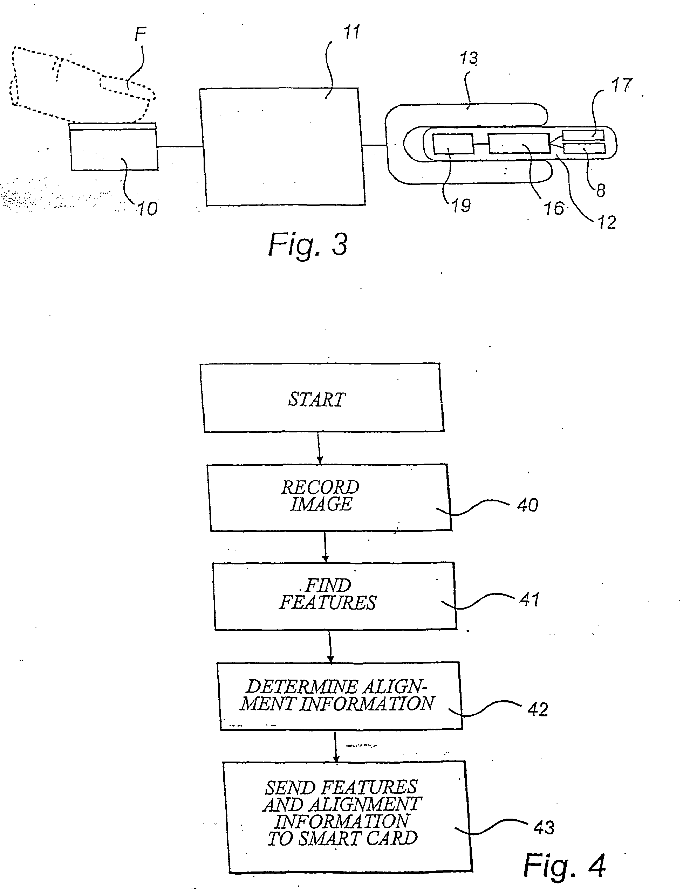

In the following, an example of a system in which the invention can be realised will be described. The system comprises, as shown in Fig. 3, a fingerprint sensor 10 for recording fingerprints, a processing unit 11 for processing fingerprint data, and a verifying unit 12 which comprises a memory for storing reference fingerprint data and a processor for processing fingerprint data and which in this case is a smart card.

The sensor 10 can, but need not, be used both for recording of reference fingerprints and for recording of current fingerprints. It can be optical, capacitive, thermal or be of some other convenient type. It can be an area sensor or a line sensor.

The processing unit 11 can be a common general computer, such as a PC. Alternatively, it can be a processing unit 11 which is specially adapted for this application. In this example, it comprises a smart card reader 13, which may be any commercially available smart card reader or a specially designed/adapted smart card reader. The smart card reader 13 may be physically integrated into the processing unit 2 or may be arranged in a casing of its own which in terms of signals is connected or connectible to the rest of the processing unit. There may be one or more processors in the processing unit 11, and the processing of fingerprint data that takes place in the processing unit can be distributed in different ways among different processors.

The verifying unit 12 consists in this example of a smart card 12. The smart card can be any type of smart card on which a comparison of fingerprint data is to be carried out. The smart card_12 has a processor 16, a memory 17 for storing of reference fingerprint data, which is extracted from a reference fingerprint from the smart card holder, and a working memory 18, as well as communication circuits 19-which enable communication between the smart card reader 13 and the smart card 12. The communication circuits 19 can, but need not, require contact between the smart card 12 and the reader 13.

In the following, an example of how the invention can be realised in the system shown in Fig. 3 will be described.

To allow the smart card 12 to be used to verify the smart card holder's identity, reference fingerprint data must be stored in the memory 17 of the smart card. This is preferably carried out under such conditions that it is possible to ensure that it is really the smart card holder's reference fingerprint data that is stored. An example of how the recording of reference fingerprint data is made is shown in the flow chart in Fig. 4.

In a first step 40, a greyscale image of the smart card holder's fingerprint is recorded by means of the sensor 10. The image is read from the sensor 10 into the processing unit 11, which finds reference features in the image, step 41.

How features are found in a fingerprint image is well known to those skilled in the art. In brief, it may however take place, for instance, by the image first being filtered with a view to removing undesirable noise from the image information and then the image being binarised by all greyscale values above a certain threshold value being given the value 1 and all greyscale values below the threshold value being given the value 0. Subsequently the image is skeletonised so that all fingerprint ridges will have a width of one pixel. Finally features are found by means of one or more filters that are used over the entire image. For each feature, for instance its location and possibly its direction may be determined. The location may be indicated by Cartesian pixel coordinates (one x coordinate and one y coordinate) in a coordinate system, which for instance has the pixel coordinates 0,0 in the centre of the image and in the lower left corner as illustrated in Figs 1a and 2a. The direction can be indicated by an angle. The angle can be quantised to one of a predetermined number of angles, for instance eight different angles.

When all features have been found in the image, the processing unit determines alignment information, step 42, which is to be used in the identity check to make it possible to determine the orientation of the current image in the fingerprint-constant reference coordinate system.

The alignment information may consist of, for instance, one or more partial areas of the current image, for example a bitmap of 24 * 24 pixels in the centre of the image, as indicated by the box 6 in Figs 2a and 2b.

In this example, however, the alignment information consists of a number of the features found, which may then be referred to as alignment features. They should be at least three in number so that both the rotational position and the translational position of the current image in relation to the fingerprint-constant coordinate system can be determined. In order to obtain greater security in the alignment and avoid problems if a feature is not found in the current image, the number of alignment features may be, say, 6. More features may possibly further increase the alignment precision, but would on the other hand disclose more about the reference fingerprint, which is undesirable.

The other features found that are not used as alignment features are used as reference features for future comparison with current features.

If the alignment information consists of features they must first be obtained or found. If the alignment information is of a type other than features, for example partial areas or a directional map, this alignment information can be determined before the current features are found.

In the next step 43, the processing unit 11 transmits the reference features and the alignment information to the smart card 12 for them to be stored in the memory 17. More specifically, the absolute coordinates (one x coordinate and one y coordinate) for the location of each reference feature and the angle of the direction of each reference feature in the fingerprint-constant reference coordinate system are transmitted to the smart card and stored as private reference data. That the reference data is private means that it is not allowed to leave the smart card but is only to be used on the smart card. To this end, reference data may be stored in a protected part of the memory 17. The alignment information on the other hand is to be used outside the smart card and is therefore stored as public reference data that is accessible to an external unit, such as the processing unit 11 in this example.

Once reference data has been stored on the smart card, the smart card holder can use the smart card to authenticate himself. An example of how this can be done will be described in the following.

The smart card holder inserts his smart card 12 in the smart card reader 13 and places the same finger on the sensor 1 as was used for recording of reference data.

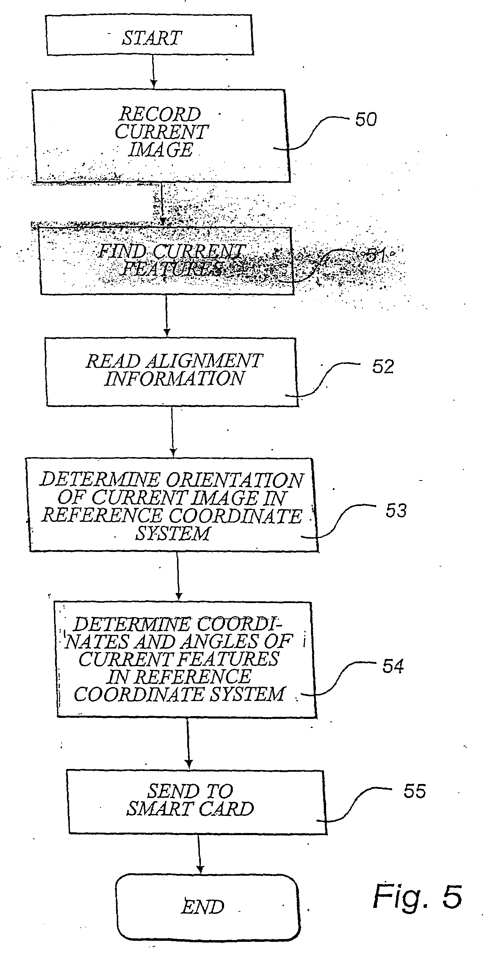

The sensor 10 records a current image of the smart card holder's fingerprint, step 50 in Fig. 5. The image is read into the computer unit 11 where it is processed in the same way as in the recording of reference data. More specifically, current features are found in the image, step 51, for instance in the way as described above. The finding may proceed, for instance, until a predetermined number of features has been found or until the entire image has been searched.

In the next step 52, the processing unit 11 reads the alignment information from the smart card. In this example, the alignment information consists of, as mentioned above, 6 alignment features, which each are defined by an x coordinate, a y coordinate and an angle. These alignment features are used to determine the orientation of the current image in the fingerprint-constant reference coordinate system, step 53. More specifically, the relative locations and angles of the alignment features are compared with the relative locations and angles of the current features. The comparison can take place with respect to all current features or a selected subset, for instance the current features from the centre of the current image. In the comparison, the current features and the alignment features are rotated and translated relative to each other. The relative locations and angles of the current features, however, are fixed during translation and rotation, as are also the relative locations and angles of the alignment features. As a result of the comparison, a position is obtained, in which the six alignments features best fit or match the current features. When this position has been determined, the coordinates of the matching current features and, thus, the orientation of the current image in the coordinate system used in the determination of_the locations and angles of the reference features are determined. This coordinate system can thus be used as a fingerprint-constant reference coordinate system for the reference features and the current features.

By the orientation of the current image in the fingerprint-constant reference coordinate system being determined, the absolute coordinates and angles of the remaining current features in this coordinate system can be determined, step 54.

The remaining current features are then transmitted to the smart card, step 55, for comparison with the reference features stored as private reference data. They can be sent as a string or list containing an x coordinate, a y coordinate and an angle for each feature.

The method described above is carried out in the processing unit 11 and can be implemented by means of a computer program.

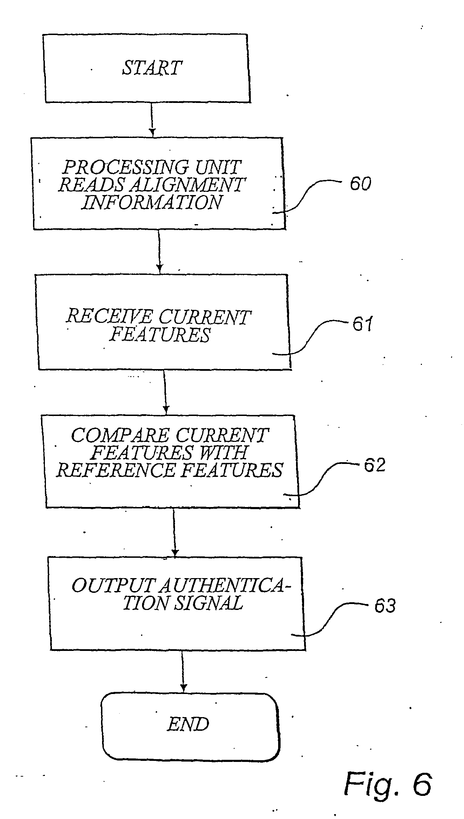

In the following, the method in the verifying unit 12 will be described with reference to the flow chart in Fig. 6.

As is evident from that stated above, the method on the smart card 12 begins by the processing unit 11 reading alignment information which in this case consists of alignment features, step 60, in the memory of the smart card.

Then, the current features, in the form of a string or list with an x coordinate a y coordinate and an angle for each feature, are received, step 61, from the processing unit 11. The current features are compared with the reference features, step 62, which are stored as private reference data in a protected part of the memory.

The comparison between current features and the reference features can be made in various ways. One way is to compare each reference feature with at least one current feature or vice versa. If the coordinates and angles for the reference features and the current features differ by less than a first and a second threshold value respectively, the reference feature is considered to match the current feature, a flag is set indicating this and a score is calculated. Then the next reference feature is compared with a current feature and so forth. If the reference feature does not match the current feature with which it is compared, the algorithm proceeds and compares with the next current feature in the list.

In pseudo code, the algorithm could be as follows: 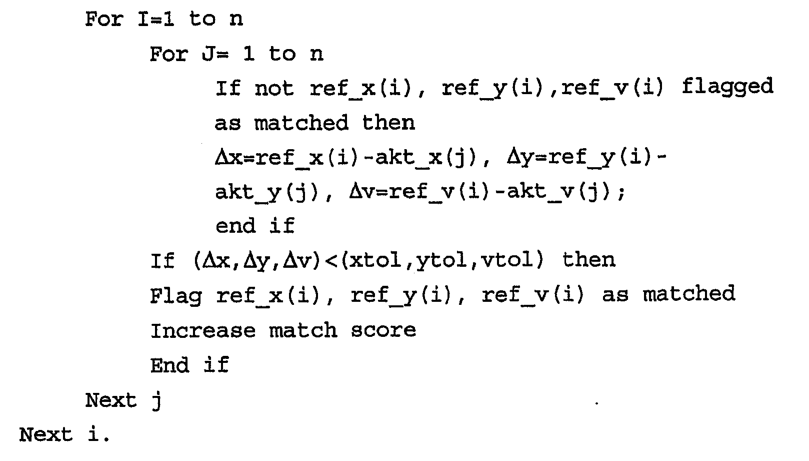 where ref_x(i) is the x coordinate for the reference feature No. i, akt_x(j) is the x coordinate for the current feature No. j, xtol is the threshold value for which deviation is allowed in x direction, y is y coordinate, v is angle and match score is the above score.

It should be pointed out that the above is a simplified example where the number of reference features and the number of current features obtained from the processing unit are the same. This is frequently not the case and then this must be taken into consideration. It should also be pointed out that xtol and ytol can be different.

When the algorithm has been traversed, the score or match score value is compared with a verification threshold value to determine whether a sufficient number of features match each other for the current fingerprint to be considered to originate from the same finger and the same person who left the reference fingerprint.

The above algorithm can carry out the comparison in about 1/100 s on a typical 8-bit microprocessor of the type that is common on smart cards. The reference data can be in the order of 100 bytes for 30 features.

The above algorithm can, of course, be modified in different ways. One alternative is to compare each reference feature with all current features and to note for which current features the threshold conditions are fulfilled. If for one reference feature the threshold conditions are fulfilled for e.g. two current features, it is possible first to choose one as the matching current feature and carry out the remaining comparisons starting from this. Subsequently it is possible to choose the other as the matching current feature and carry out the remaining comparisons starting from this. Finally, it is checked which choice gives the highest score and this is compared with the verification threshold value.

Another modification is that the processing unit, before storing the reference features on the smart card, sorts the features, for instance according to x or y coordinate. When the identity check is to be made, the processing unit sorts the current features correspondingly. Owing to the above-mentioned deformation that may take place in the recording of the current fingerprint, it is not certain that the sorting of the current features results in exactly the same order as the sorting of reference features. If it is taken into consideration how far away from each other a current feature and a reference feature are maximally allowed to be positioned to be considered to represent the same feature, the processor of the smart card can determine for which current features in the sorted list it is worth reversing the order and making a comparison with more than one reference feature.

The procedure on the smart card can be terminated by the smart card 12 emitting a signal to the processing unit 11, indicating whether the identity of the person whose current fingerprint was recorded and used for the comparison with reference data on the smart card is authenticated or not, step 63.

In order to further increase security and/or make the identity check flexible, the comparison of features may be supplemented with a comparison based on some other aspect of fingerprint information. When the orientation of the current image in the reference coordinate system has been determined, it is possible to select, in addition to the absolute coordinates for the current features, for instance, different current partial areas of the current image and send them to the smart card to be compared with reference partial areas which have previously been stored as private reference data. The current partial areas can be selected by means of coordinates indicating the locations of reference partial areas. These coordinates can be stored in the public reference data so that they can be read by the processing unit. On the smart card, the current partial areas are compared with the private partial areas and a score is calculated based on the similarity between overlapping pixels. A first threshold value can be used, for instance, to determine whether the partial areas match each other and a second threshold value can be used to determine whether a sufficient number of partial areas match each other. The criterion for the identity of the current person to be considered authenticated can be that the verification threshold value is to be achieved separately for both types of matching or be achieved for only one type of matching. Alternatively, it is possible to use some type of criterion which is based on weighting of the verification threshold values for both types of matching. It goes without saying that the matching of features can also be used with some other type of matching than matching of partial areas, for instance matching of directional maps or of some type of code created from the fingerprint.

### Alternative Embodiments

Even if the invention enables a final identity check in a unit with limited processor capacity and limited memory capacity, it may, of course, also be used in other contexts.

An example where the invention is used for verification has been described above. However, it may also be used in the same way for identification. For instance, a verifying unit may contain reference data for a plurality of persons. Current features for the person who wants to authenticate himself are then sent to the verifying unit which makes a comparison with the reference data for the different persons and selects the person for whom the comparison in the verifying unit yields the highest score, provided, of course, that the verification threshold value is exceeded.

As mentioned above, the fingerprint in the reference fingerprint image and the fingerprint in the current image can be aligned each separately with respect to a fingerprint-constant reference coordinate system without using alignment information. Then the appearance of the fingerprint is used instead and a reference point in this and possibly also a main direction of the fingerprint are determined.

## Claims

1. A method for use in checking a person's identity, which method is carried out in a processing unit (11) having a first processor, the method comprising:
findinging, (51) in a current image of a fingerprint of the person, current features of at least one predetermined type,
determining (53) how the current image is oriented in a fingerprint-constant reference coordinate system, in which absolute coordinates have previously been determined for reference features, with which the current features are to be compared for checking the person's identity, and
determining (54) absolute coordinates for the location of the current features in the fingerprint-constant reference coordinate system **characterised by**
receiving (52) alignment information, comprising absolute coordinates of a subset (6) of reference features in the fingerprint-constant reference coordinate system, from a verifying unit (12), having a second processor (16) and a memory (17) storing said alignment information,
determining (53) the absolute coordinates for the locations of a subset of the current features and the orientation of the current image based on said alignment information, and
sending (55) the absolute coordinates in the fingerprint-constant reference coordinate system of the current features to said verifying unit (12) for them to be compared with all the reference features.

2. A method as claimed in claim 1, wherein the absolute coordinates for the location of the current features are first determined in the coordinate system of the current image and then translated into absolute coordinates in the reference coordinate system.

3. A method as claimed in claims 1 or 2, further comprising determining an angle in the fingerprint-constant reference coordinate system for at least some of the current features, and transmitting the angles to the verifying unit.

4. A method as claimed in any one of the preceding claims, wherein the current image is recorded by means of a sensor on which a finger is placeable in different positions.

5. computer program product, comprising program code which, when executed by a processor, carries out the method as claimed in any one of claims 1-4.

6. An apparatus for use in checking a person's identity, which apparatus comprises a processing unit which is adapted to carry out the method as claimed in any one of claims 1-4.

7. A method for use in checking a person's identity, which method is carried out in a verifying unit (12), comprising a second processor (16) and a memory (17) storing reference fingerprint data comprising reference features in a fingerprint-constant reference coordinate system, the method being **characterised by**:
transferring (60) to a processing unit (11) having a first processor, alignment information, comprising absolute coordinates of a subset (6) of the reference features, which alignment information makes it possible to determine the orientation of the current image in the fingerprint-constant reference coordinate system,
receiving (61) from the processing unit (11) absolute coordinates for the location of current features in a current image of a fingerprint from the person, the absolute coordinates being coordinates in the fingerprint-constant reference coordinate system; and
comparing (62) the absolute coordinates for the current features with the absolute coordinates for the reference features.

8. A method as claimed in claim 7, wherein the step of transferring (60) alignment information to a processing unit (11) comprises transferring
alignment features which are fetched from a reference fingerprint image from which also the reference features are fetched, partial areas from the reference fingerprint image, or a directional map which is based on the reference fingerprint image.

9. A method as claimed in any one of claims 7-8, wherein the comparison of the absolute coordinate comprises comparing the absolute coordinates for each of the current features with the absolute coordinates for at least one of the reference features or vice versa, and indicating for each comparison whether a first threshold condition is fulfilled.

10. A method as claimed in any one of claims 7-9, further comprising receiving from the processing unit an angle for each of the current features, comparing the angle for each of the current features with the angle of at least one of the reference features or vice versa, and indicating for each comparison whether a second threshold condition is fulfilled.

11. A method as claimed in any one of claims 7-10, further comprising receiving from the processing unit additional data from the current image of the firiger-print, and comparing the additional data with additional reference data which is stored in the verifying unit.

12. A method as claimed in claim 11, further comprising determining that the person's identity is guaranteed if one of the comparison of the features and the comparison of the additional data fulfils a verification threshold value.

13. A method as claimed in claim 11, further comprising determining that the person's identity is guaranteed only if both the comparison of the features and the comparison of the additional data fulfil a verification threshold value.

14. A computer program product, comprising program code which, when executed by a processor, carries out the method as claimed in any one of claims 7-13.

15. An apparatus comprising a verifying unit which is adapted to carry out a method as claimed in any one of claims 7-13.

16. An apparatus as claimed in claim 15, which apparatus is portable.

17. An apparatus as claimed in claim 15 or 16, which apparatus is a smart card.

18. A method for recording reference fingerprint data for a person, which method is carried out in a processing unit (11) having a first processor, the method comprising:
finding (41), in an image of the person's fingerprint, features of at least one predetermined type and determining absolute coordinates, in a fingerprint-constant reference coordinate system, for these;
determining (42) alignment information comprising absolute coordinates of a subset (6) of said features, which alignment information makes it possible to determine the orientation of the current image in the fingerprint-constant reference coordinate system; and
in a verifying unit (12) comprising a second processor (16) and a memory (17) storing (43) the absolute coordinates for the features as private reference fingerprint data which is not allowed to be read from the verifying unit, and the alignment information as public reference fingerprint data which is allowed to be read from the verifying unit (11).

19. An apparatus which comprises a processing unit which is adapted to carry out a method as claimed in claim 18.

20. A system for checking a person's identity, the system comprising a processing unit (11) having a first processor, and a verifying unit (12), having a second processor (16) and a memory (17), the processing unit (11) being in communication with the verifying unit (12) whereby:
the processing unit (11) is arranged to find (51), in a current image of a fingerprint of the person, current features of at least one predetermined type,
the processing unit (11), is arranged to determine (53) how the current image is oriented in a fingerprint-constant reference coordinate system, in which absolute coordinates have previously been determined for reference features, with which the current features are to be compared for checking the person's identity, and
the processing unit (11), is arranged to determine (54) absolute coordinates for the location of the current features in the fingerprint-constant reference coordinate system,
the verifying unit (12) is arranged to transfer (60) to the processing unit (11) alignment information, comprising absolute coordinates of a subset (6) of reference features in the fingerprint-constant reference coordinate system, which alignment information is stored in the memory (17),
the processing unit (11) is arranged to determine (53), the orientation of the current image based on said alignment information,
the processing unit (11) is arranged to send (55) to the verifying unit (11) the absolute coordinates for at least some of the current features to said verifying unit (12), and
the verifying unit (12) is arranged to compare (62) the current features with the reference features.

## Patentansprüche

1. Verfahren zur Verwendung beim Prüfen der Identität einer Person, wobei das Verfahren in einer Verarbeitungseinheit (11) mit einem ersten Prozessor durchgeführt wird und das Verfahren Folgendes umfasst:
Erkennen (51) aktueller Merkmale wenigstens eines vorgegebenen Typs in einem aktuellen Bild eines Fingerabdrucks der Person;
Bestimmen (53), wie das aktuelle Bild in einem fingerabdruckkonstanten Bezugskoordinatensystem ausgerichtet ist, bei dem absolute Koordinaten vorab für Bezugsmerkmale bestimmt wurden, mit denen die aktuellen Merkmale zu vergleichen sind, um die Identität der Person zu prüfen; und
Bestimmen (54) absoluter Koordinaten für die Anordnung der aktuellen Merkmale in dem fingerabdruckkonstanten Bezugskoordinatensystem,
**gekennzeichnet durch**
Empfangen (52) von Abgleichinformationen, die absolute Koordinaten eines Teilsatzes (6) von Bezugsmerkmalen in dem fingerabdruckkonstanten Bezugskoordinatensystem von einer Verifizierungseinheit (12) mit einem zweiten Prozessor (16) und einem Speicher (17) zum Speichern der Abgleichinformationen umfassen;
Bestimmen (53) der absoluten Koordinaten für die Anordnungen eines Teilsatzes der aktuellen Merkmale und der Ausrichtung des aktuellen Bildes auf Basis der Abgleichinformationen; und
Senden (55) der absoluten Koordinaten in dem fingerabdruckkonstanten Bezugskoordinatensystem der aktuellen Merkmale an die Verifizierungseinheit (12), damit sie mit allen Bezugsmerkmalen verglichen werden können.

2. Verfahren nach Anspruch 1, wobei die absoluten Koordinaten für die Anordnung der aktuellen Merkmale zuerst in dem Koordinatensystem des aktuellen Bildes bestimmt werden und dann in absolute Koordinaten in dem Bezugskoordinatensystem übersetzt werden.

3. Verfahren nach Anspruch 1 oder 2, des Weiteren umfassend Bestimmen eines Winkels in dem fingerabdruckkonstanten Bezugskoordinatensystem für wenigstens manche der aktuellen Merkmale und Übermitteln der Winkel an die Verifizierungseinheit.

4. Verfahren nach einem der vorhergehenden Ansprüche, wobei das aktuelle Bild mit Hilfe eines Sensors, auf dem ein Finger in unterschiedlichen Positionen platziert werden kann, aufgezeichnet wird.

5. Rechnerprogrammprodukt, das Rechnercode umfasst, der, wenn er durch einen Prozessor ausgeführt wird, das Verfahren nach einem der Ansprüche 1 bis 4 durchführt.

6. Vorrichtung zur Verwendung beim Prüfen der Identität einer Person, wobei die Vorrichtung eine Verarbeitungseinheit umfasst, die dazu eingerichtet ist, das Verfahren nach einem der Ansprüche 1 bis 4 durchzuführen.

7. Verfahren zur Verwendung beim Prüfen der Identität einer Person, wobei das Verfahren durchgeführt wird in einer Verifizierungseinheit (12), die einen zweiten Prozessor (16) und einen Speicher (17) zum Speichern von Bezugsfingerabdruckdaten, die Bezugsmerkmale in einem fingerabdruckkonstanten Bezugskoordinatensystem umfassen, umfasst, wobei das Verfahren **gekennzeichnet ist durch**:
Übertragen (60) von Abgleichinformationen, die absolute Koordinaten eines Teilsatzes (6) der Bezugsmerkmale umfassen, an eine Verarbeitungseinheit (11) mit einem ersten Prozessor, wobei die Abgleichinformationen das Bestimmen der Ausrichtung des aktuellen Bildes in dem fingerabdruckkonstanten Bezugskoordinatensystem ermöglichen;
Empfangen (61) von absoluten Koordinaten für die Anordnung aktueller Merkmale in einem aktuellen Bild eines Fingerabdrucks von der Person von der Verarbeitungseinheit (11), wobei die absoluten Koordinaten Koordinaten in dem fingerabdruckkonstanten Bezugskoordinatensystem sind; und
Vergleichen (62) der absoluten Koordinaten für die aktuellen Merkmale mit den absoluten Koordinaten für die Bezugsmerkmale.

8. Verfahren nach Anspruch 7, wobei der Schritt des Übertragens (60) von Abgleichinformationen an eine Verarbeitungseinheit (11) das Übertragen von Abgleichmerkmalen, die aus einem Bezugsfingerabdruckbild abgerufen werden, aus dem außerdem die Bezugsmerkmale abgerufen werden, Teilbereichen von dem Bezugsfingerabdruckbild oder einem Richtungsplan, der auf dem Bezugsfingerabdruckbild basiert, umfasst.

9. Verfahren nach einem der Ansprüche 7 bis 8, wobei der Vergleich der absoluten Koordinate das Vergleichen der absoluten Koordinaten für jedes der aktuellen Merkmale mit den absoluten Koordinaten für wenigstens eines der Bezugsmerkmale oder umgekehrt und das Anzeigen für jeden Vergleich, ob eine erste Schwellenbedingung erfüllt ist, umfasst.

10. Verfahren nach einem der Ansprüche 7 bis 9, des Weiteren umfassend Empfangen eines Winkels für jedes der aktuellen Merkmale von der Verarbeitungseinheit, Vergleichen des Winkels für jedes der aktuellen Merkmale mit dem Winkel von wenigstens einem der Bezugsmerkmale oder umgekehrt und Anzeigen für jeden Vergleich, ob eine zweite Schwellenbedingung erfüllt ist.

11. Verfahren nach einem der Ansprüche 7 bis 10, des Weiteren umfassend Empfangen zusätzlicher Daten aus dem aktuellen Bild des Fingerabdrucks von der Verarbeitungseinheit und Vergleichen der zusätzlichen Daten mit zusätzlichen Bezugsdaten, die in der Verifizierungseinheit gespeichert sind.

12. Verfahren nach Anspruch 11, des Weiteren umfassend Bestimmen, dass die Identität der Person garantiert ist, wenn eines von dem Vergleich der Merkmale und dem Vergleich der zusätzlichen Daten einen Verifizierungsschweiienwert erfüllt.

13. Verfahren nach Anspruch 11, des Weiteren umfassend Bestimmen, dass die Identität der Person lediglich dann garantiert ist, wenn sowohl der Vergleich der Merkmale als auch der Vergleich der zusätzlichen Daten einen Verifizierungsschwellenwert erfüllen.

14. Rechnerprogrammprodukt, das einen Programmcode umfasst, der, wenn er von einem Prozessor ausgeführt wird, das Verfahren nach einem der Ansprüche 7 bis 13 durchführt.

15. Vorrichtung, die eine Verifizierungseinheit umfasst, die dazu eingerichtet ist, ein Verfahren nach einem der Ansprüche 7 bis 13 durchzuführen.

16. Vorrichtung nach Anspruch 15, wobei die Vorrichtung tragbar ist.

17. Vorrichtung nach Anspruch 15 oder 16, wobei die Vorrichtung eine intelligente Chip-Karte ist.

18. Verfahren zum Aufzeichnen von Bezugsfingerabdruckdaten für eine Person, wobei das Verfahren in einer Verarbeitungseinheit (11) mit einem ersten Prozessor durchgeführt wird und das Verfahren Folgendes umfasst:
Erkennen (51) von Merkmalen wenigstens eines vorgegebenen Typs in einem Bild des Fingerabdrucks der Person und Bestimmen absoluter Koordinaten, in einem fingerabdruckkonstanten Bezugskoordinatensystem, für diese;
Bestimmen (42) von Abgleichinformationen, die absolute Koordinaten eines Teilsatzes (6) der Merkmale umfassen, wobei die Abgleichinformationen das Bestimmen der Ausrichtung des aktuellen Bildes in dem fingerabdruckkonstanten Bezugskoordinatensystem ermöglichen; und
in einer Verifizierungseinheit (12), die einen zweiten Prozessor (16) und einen Speicher (17) umfasst, Speichern (43) der absoluten Koordinaten für die Merkmale als private Bezugsfingerabdruckdaten, die nicht von der Verifizierungseinheit gelesen werden dürfen, und der Abgleichinformationen als öffentliche Bezugsfingerabdruckdaten, die von der Verifizierungseinheit (11) gelesen werden dürfen.

19. Vorrichtung, die eine Verarbeitungseinheit umfasst, die dazu eingerichtet ist, ein Verfahren nach Anspruch 18 durchzuführen.

20. System zum Prüfen der Identität einer Person, wobei das System eine Verarbeitungseinheit (11) mit einem ersten Prozessor und eine Verifizierungseinheit (12) mit einem zweiten Prozessor (16) und einem Speicher (17) umfasst, wobei die Verarbeitungseinheit (11) mit der Verifizierungseinheit (12) kommuniziert, wobei:
die Verarbeitungseinheit (11) dazu eingerichtet ist, in einem aktuellen Bild eines Fingerabdrucks der Person aktuelle Merkmale wenigstens eines vorgegebenen Typs zu erkennen (51);
die Verarbeitungseinheit (11) dazu eingerichtet ist, zu bestimmen (53), wie das aktuelle Bild in einem fingerabdruckkonstanten Bezugskoordinatensystem ausgerichtet ist, bei dem absolute Koordinaten vorab für Bezugsmerkmale bestimmt wurden, mit denen die aktuellen Merkmale zu vergleichen sind, um die Identität der Person zu prüfen; und
die Verarbeitungseinheit (11) dazu eingerichtet ist, absolute Koordinaten für die Anordnung der aktuellen Merkmale in dem fingerabdruckkonstanten Bezugskoordinatensystem zu bestimmen (54);
die Verifizierungseinheit (12) dazu eingerichtet ist, an die Verarbeitungseinheit (11) Abgleichinformationen zu übertragen (60), die absolute Koordinaten eines Teilsatzes (6) von Bezugsmerkmalen in dem fingerabdruckkonstanten Bezugskoordinatensystem umfassen, wobei die Abgleichinformationen in dem Speicher (17) gespeichert werden;
die Verarbeitungseinheit (11) dazu eingerichtet ist, die Ausrichtung des aktuellen Bildes auf Basis der Abgleichinformationen zu bestimmen (53);
die Verarbeitungseinheit (11) dazu eingerichtet ist, an die Verifizierungseinheit (11) die absoluten Koordinaten für wenigstens manche der aktuellen Merkmale an die Verifizierungseinheit (12) zu senden (55); und
die Verifizierungseinheit (12) dazu eingerichtet ist, die aktuellen Merkmale mit den Bezugsmerkmalen zu vergleichen (62).

## Revendications

1. Procédé à utiliser lors du contrôle de l'identité d'une personne, lequel procédé est exécuté dans une unité de traitement (11) ayant un premier processeur, le procédé comprenant les étapes consistant à :
trouver (51) dans une image actuelle d'une empreinte digitale de la personne, des caractéristiques actuelles d'au moins un type prédéterminé ;
déterminer (53) la façon dont l'image actuelle est orientée dans un système de coordonnées de référence de constantes d'empreinte digitale, dans lequel des coordonnées absolues ont précédemment été déterminées pour des caractéristiques de référence, avec lequel les caractéristiques actuelles doivent être comparées pour contrôler l'identité d'une personne, et
déterminer (54) des coordonnées absolues de l'emplacement des caractéristiques actuelles dans le système de coordonnées de référence de constantes d'empreinte digitale, **caractérisé en ce qu'**il comprend les étapes consistant à :
recevoir (52) des informations d'alignement, comprenant des coordonnées absolues d'un sous-ensemble (6) de caractéristiques de référence dans le système de coordonnées de référence de constantes d'empreinte digitale, d'une unité de vérification (12), ayant un second processeur (16) et une mémoire (17) qui stockent lesdites informations d'alignement,
déterminer (53) les coordonnées absolues pour les emplacements d'un sous-ensemble des caractéristiques actuelles et l'orientation de l'image actuelle sur la base desdites informations d'alignement, et
envoyer (55) les coordonnées absolues dans le système de coordonnées de référence de constantes d'empreinte digitale des caractéristiques actuelles à ladite unité de vérification (12) pour les comparer à l'ensemble des caractéristiques de référence.

2. Procédé selon la revendication 1, dans lequel les coordonnées absolues de l'emplacement des caractéristiques actuelles sont tout d'abord déterminées dans le système de coordonnées de l'image actuelle puis translatées en coordonnées absolues dans le système de coordonnées de référence.

3. Procédé selon la revendication 1 ou 2, comprenant en outre les étapes consistant à déterminer un angle dans le système de coordonnées de référence de constantes d'empreinte digitale pour au moins certaines des caractéristiques actuelles, et transmettre les angles à l'unité de vérification.

4. Procédé selon l'une quelconque des revendications précédentes, dans lequel l'image actuelle est enregistrée au moyen d'un capteur sur lequel un doigt peut être placé dans différentes positions.

5. Produit-programme informatique, comprenant un code de programme qui, lorsqu'il est exécuté par un processeur, exécute le procédé selon l'une quelconque des revendications 1 à 4.

6. Appareil à utiliser lors du contrôle de l'identité d'une personne, lequel appareil comprend une unité de traitement qui est adaptée pour exécuter le procédé selon l'une quelconque des revendications 1 à 4.

7. Procédé à utiliser lors du contrôle de l'identité d'une personne, lequel procédé est exécuté dans une unité de vérification (12), comprenant :
un second processeur (16) et une mémoire (17) qui stockent des données d'empreinte digitale de référence comprenant des caractéristiques de référence dans un système de coordonnées de référence de constantes d'empreinte digitale, le procédé étant **caractérisé en ce qu'**il comprend les étapes consistant à :
transférer (60) vers une unité de traitement (11) ayant un premier processeur, des informations d'alignement, comprenant des coordonnées absolues d'un sous-ensemble (6) des caractéristiques de référence, lesquelles informations d'alignement permettent de déterminer l'orientation de l'image actuelle dans le système de coordonnées de référence de constantes d'empreinte digitale,
recevoir (61) de l'unité de traitement (11) des coordonnées absolues pour l'emplacement des caractéristiques actuelles dans une image actuelle d'une empreinte digitale de la personne, les coordonnées absolues étant des coordonnées dans le système de coordonnées de référence de constantes d'empreinte digitale ; et
comparer (62) les coordonnées absolues des caractéristiques actuelles avec les coordonnées absolues des caractéristiques de référence.

8. Procédé selon la revendication 7, dans lequel l'étape consistant à transférer (60) des informations d'alignement vers une unité de traitement (11) comprend l'étape consistant à transférer des caractéristiques d'alignement qui sont extraites d'une image d'empreinte digitale de référence à partir de laquelle les caractéristiques de référence sont également extraites, des zones partielles de l'image d'empreinte digitale de référence, ou une application directionnelle qui est basée sur l'image d'empreinte digitale de référence.

9. Procédé selon l'une quelconque des revendications 7 à 8, dans lequel la comparaison des coordonnées absolues comprend les étapes consistant à comparer les coordonnées absolues de chacune des caractéristiques actuelles avec les coordonnées absolues d'au moins une des caractéristiques de référence ou vice et versa, et indiquer pour chaque comparaison si une première condition de seuil est ou non satisfaite.

10. Procédé selon l'une quelconque des revendications 7 à 9, comprenant en outre les étapes consistant à recevoir de l'unité de traitement un angle pour chacune des caractéristiques actuelles, comparer l'angle de chacune des caractéristiques actuelles avec l'angle d'au moins une des caractéristiques de référence ou vice et versa, et
indiquer pour chaque comparaison si une seconde condition de seuil est ou non satisfaite.

11. Procédé selon l'une quelconque des revendications 7 à 10, comprenant en outre les étapes consistant à recevoir de l'unité de traitement des données supplémentaires provenant de l'image actuelle de l'empreinte digitale, et comparer les données supplémentaires aux données de référence supplémentaires qui sont stockées dans l'unité de vérification.

12. Procédé selon la revendication 11, comprenant en outre l'étape consistant à déterminer que l'identité de la personne est garantie si l'une parmi la comparaison des caractéristiques et la comparaison des données supplémentaires satisfait à une valeur de seuil de vérification.

13. Procédé selon la revendication 11, comprenant en outre l'étape consistant à déterminer que l'identité de la personne est garantie uniquement si la comparaison des caractéristiques et la comparaison des données supplémentaires satisfont toutes deux à une valeur de seuil de vérification.

14. Produit-programme informatique, comprenant un code de programme qui, lorsqu'il est exécuté par un processeur, exécute le procédé selon l'une quelconque des revendications 7 à 13.

15. Appareil comprenant une unité de vérification qui est adaptée pour exécuter un procédé selon l'une quelconque des revendications 7 à 13.

16. Appareil selon la revendication 15, lequel appareil est portatif.

17. Appareil selon l'une quelconque des revendications 15 ou 16, lequel appareil est une carte intelligente.

18. Procédé destiné à enregistrer des données d'empreinte digitale de référence d'une personne, lequel procédé est exécuté dans une unité de traitement (11) ayant un premier processeur, le procédé comprenant les étapes consistant à :
trouver (41), dans une image de l'empreinte digitale de la personne, les caractéristiques d'au moins un type prédéterminé et déterminer des coordonnées absolues, dans un système de coordonnées de référence de constantes d'empreinte digitale, pour celles-ci ;
déterminer (42) des informations d'alignement comprenant des coordonnées absolues d'un sous-ensemble (6) desdites caractéristiques, lesquelles informations d'alignement permettent de déterminer l'orientation de l'image actuelle dans le système de coordonnées de référence de constantes d'empreinte digitale ; et
dans une unité de vérification (12) comprenant un second processeur (16) et une mémoire (17), stocker (43) les coordonnées absolues des caractéristiques en tant que données privées d'empreinte digitale de référence dont la lecture n'est pas autorisée à partir de l'unité de vérification, et les informations d'alignement en tant que données publiques d'empreinte digitale de référence dont la lecture est autorisée à partir de l'unité de vérification (11).

19. Appareil comprenant une unité de traitement qui est adaptée pour exécuter un procédé selon la revendication 18.

20. Système destiné à contrôler l'identité d'une personne, le système comprenant une unité de traitement (11) ayant un premier processeur, et une unité de vérification (12) ayant un second processeur (16) et une mémoire (17), l'unité de traitement (11) étant en communication avec l'unité de vérification (12), moyennant quoi :
l'unité de traitement (11) est agencée pour trouver (51), dans une image actuelle d'une empreinte digitale de la personne, des caractéristiques actuelles d'au moins un type prédéterminé,
l'unité de traitement (11), est agencée pour déterminer (53) la façon dont l'image actuelle est orientée dans un système de coordonnées de référence de constantes d'empreinte digitale, dans lequel des coordonnées absolues ont précédemment été déterminées pour les caractéristiques de référence, avec lequel les caractéristiques actuelles vont être comparées pour contrôler l'identité de la personne, et
l'unité de traitement (11) est agencée pour déterminer (54) des coordonnées absolues de l'emplacement des caractéristiques actuelles dans le système de coordonnées de référence de constantes d'empreinte digitale,
l'unité de vérification (12) est agencée pour transférer (60) vers l'unité de traitement (11) des informations d'alignement comprenant des coordonnées absolues d'un sous-ensemble (6) de caractéristiques de référence dans le système de coordonnées de référence de constantes d'empreinte digitale, lesquelles informations d'alignement sont stockées dans la mémoire (17),
l'unité de traitement (11) est agencée pour déterminer (53), l'orientation de l'image actuelle sur la base desdites informations d'alignement,
l'unité de traitement (11) est agencée pour envoyer (55) à l'unité de vérification (11) les coordonnées absolues d'au moins certaines des caractéristiques actuelles vers ladite unité de vérification (12), et
l'unité de vérification (12) est agencée pour comparer (62) les caractéristiques actuelles avec les caractéristiques de référence.
